# EUROPÄISCHE PATENTANMELDUNG

(11) **EP 4 424 648 A1**
(43) Veröffentlichungstag der Anmeldung: **04.09.2024**
(21) Anmeldenummer: 24159130.4
(22) Anmeldetag: 22.02.2024
(51) Int. Cl.: C02F 9/00, B01D 61/02, B01D 61/04, C02F 3/12, C02F 1/44, C02F 1/28, C02F 1/32, C02F 3/02, C02F 3/34, C02F 1/74, C02F 101/16, C02F 101/30, C02F 3/08, C02F 3/10

(54) **VORRICHTUNG UND VERFAHREN ZUR AUFBEREITUNG VON FRISEURABWASSER**

(30) Priorität: 02.03.2023 DE 102023105201
(71) Anmelder: BUK Management GmbH, 01067 Dresden (DE)
(72) Erfinder: NOLDE, Erwin, 10405 Berlin (DE); SACK, Holger, 10405 Berlin (DE); BROCKMANN, Petra, 01067 Dresden (DE); BROCKMANN-KNÖDLER, Thomas, 01067 Dresden (DE); GIESE, Simone, 01067 Dresden (DE)
(74) Vertreter: Kirchner, Veit

(57) **Zusammenfassung**

Die vorliegende Erfindung betrifft eine Vorrichtung zur Aufbereitung von Friseurabwasser, mit einer Zuleitung für Friseurabwasser, die die Vorrichtung mit mindestens einem Friseurwaschtisch verbindet, wobei in der Zuleitung mindestens ein vorzugsweise automatisch rückspülendes Rückhaltelement zum Zurückhalten von Haaren angeordnet ist und einem ersten Modul zu biologischen Klärung des Friseurabwassers mittels Mikroorganismen wobei weiterhin eine Belüftungseinrichtung vorgesehen ist, welche dazu ausgelegt ist, das Friseurabwasser in dem ersten Modul zu durchsprudeln. Weiterhin betrifft die vorliegende Erfindung ein Verfahren zur Aufbereitung von Friseurabwasser, welches vorzugsweise mit einer erfindungsgemäßen Vorrichtung ausgeführt wird.

## Beschreibung

Die vorliegende Erfindung betrifft eine Vorrichtung zur Aufbereitung von Friseurabwasser sowie ein Verfahren zur Aufbereitung von Friseurabwasser, welches vorzugsweise mittels einer erfindungsgemäßen Vorrichtung ausgeführt wird.

Im Friseurbetrieb ist der Wasserverbrauch aufgrund der Notwendigkeit des Haarewaschens, ggf. mehrfachen Ausspülens von Färbe- oder Pflegemitteln etc. recht hoch.

Gleichzeitig gelten Friseurabwässer aufgrund der darin enthaltenen Chemikalien als nur schwer aufzubereiten, sodass bei herkömmlichen Wasseraufbereitungsanlagen bzw. Grauwasseranlagen die Einleitung von Friseurabwasser herstellerseitig untersagt ist.

Der vorliegenden Erfindung liegt vor diesem Hintergrund die Aufgabe zugrunde, die Nachteile des Stands der Technik abzumildern oder zu beseitigen. Insbesondere liegt der vorliegenden Erfindung die Aufgabe zugrunde, eine Vorrichtung zur effizienten und umweltfreundlichen Aufbereitung von Friseurabwasser zu schaffen.

Diese Aufgabe wird durch eine Vorrichtung und ein Verfahren mit den Merkmalen der unabhängigen Ansprüche gelöst. Vorteilhafte Weiterbildungen der Erfindung sind Gegenstand der Unteransprüche.

Demnach ist eine Vorrichtung zur Aufbereitung von Friseurabwasser vorgesehen, mit
- einer Zuleitung für Friseurabwasser, die die Vorrichtung mit mindestens einem Friseurwaschtisch verbindet, wobei in der Zuleitung mindestens ein vorzugsweise automatisch rückspülendes Rückhaltelement zum Zurückhalten von Haaren angeordnet ist;
- einem ersten Modul zur biologischen Klärung des Friseurabwassers mittels Mikroorganismen; wobei
- die Vorrichtung weiterhin eine Belüftungseinrichtung aufweist, welche dazu ausgelegt ist, das Friseurabwasser in dem ersten Modul zu durchsprudeln.

Erfindungsgemäß erfolgt somit vorzugsweise eine rein biologische Aufbereitung des Friseurabwassers mittels Schadstoffe in dem Friseurabwasser abbauenden Mikroorganismen, ohne dass durch die Aufbereitung zusätzliche Abfallprodukte, wie beispielsweise separat zu entsorgende chemische Abfallprodukte, entstünden.

Hierbei liegt der Fokus der vorliegenden Erfindung auf der Aufbereitung von Friseurabwässern und eine erfindungsgemäße Vorrichtung kann gezielt für die ausschließliche Aufbereitung von Friseurabwasser ausgelegt und vorgesehen sein.

Das Rückhaltelement kann als Sieb ausgestaltet sein, welches im Friseurabwasser mitgeführte Haare zurückhält. Vorzugsweise weist der mindestens eine Friseurwaschtisch ebenfalls mindestens ein Rückhalteelement für Haare auf, welches beispielsweise als Sieb oder Bürste ausgestaltet sein kann.

Die in dem ersten Modul enthaltenen Mikroorganismen wurden vorzugsweise gezielt für die Aufbereitung von Friesurabwasser selektiert. Bei diesem Selektionsvorgang macht man sich vorzugsweise die natürliche Entstehung eines Biofilms auf mit Abwasser im Allgemeinen in Kontakt befindlichen Flächen zu nutze.

Somit wird bei einer ersten Inbetriebnahme einer erfindungsgemäßen Vorrichtung beispielsweise zunächst Friseurabwasser in die Vorrichtung und das zunächst noch nicht mit Mikroorganismen ausgestattete erste Modul geleitet.

In dem durch das Friseurabwasser gebildeten Milieu gedeihen vor allem Mikroorganismen, welche die in dem Friseurabwasser enthaltenen Schadstoffe verstoffwechseln können, da diese Mikroorganismen einen Standortvorteil haben. So bildet sich mit der Zeit eine auf die Aufbereitung von Friseurabwasser spezialisierte Population von Mikroorganismen in dem ersten Modul, beispielsweise an dessen Membran, aus. Selbiges gilt auch bei Ausgestaltungen, bei denen zusätzlich ein zweites Modul zum Einsatz kommt.

Besteht bereits eine derartige Kolonie / Population von auf die Aufbereitung von Friseurabwasser spezialisierten Mikroorganismen, so kann diese Kolonie / Population verwendet werden, um weitere Vorrichtungen zur Aufbereitung von Friseurabwasser anzuimpfen.

Um die biologische Aufbereitung des Friseurabwassers weiter zu verbessern, kann eine erfindungsgemäße Vorrichtung mit einem dem Rückhaltelement fluidisch nachgeschalteten und dem ersten Modul fluidisch vorgeschalteten zweiten Modul zur biologischen Vorklärung des Friseurabwassers ausgestattet sein, wobei die Belüftungseinrichtung vorzugsweise dazu ausgelegt ist, das Friseurabwasser in dem zweiten Modul zu durchsprudeln.

Die Vorklärung kann eine mechanische Abwasserreinigung umfassen und beispielsweise der Abscheidung von sedimentierbaren Stoffen dienen. Ein zweites Modul zur biologischen Vorklärung dient somit vorzugsweise dem Schutz von späteren Behandlungsstufen vor Betriebsstörungen und bietet eine erste Entfernung von in dem Friseurabwasser enthaltenen Verunreinigungen. Zusätzlich kann eine Vorklärung im zweiten Modul den Sauerstoffbedarf der Abbauprozesse bei der weiteren biologischen Aufbereitung in dem ersten Modul verringern.

Weiterhin kann das zweite Modul als Pufferspeicher für das Friseurabwasser dienen, von welchem das Friseurabwasser in begrenzten Chargen dem ersten Modul zugeführt wird.

Vorzugsweise sind die ersten und zweiten Module in Reihe geschaltet und weisen weiterhin vorzugsweise jeweils unterschiedliche Mikroorganismen zur schrittweisen biologischen Klärung des Friseurabwassers auf.

Ein jedes der ersten und zweiten Module kann eine oder mehrere Funktionseinheiten, wie beispielsweise Bioreaktoren oder Kartuschen umfassen, welche vorzugsweise in Reihe geschaltet sind.

Zum Auffangen des mittels einer erfindungsgemäßen Vorrichtung aufbereiteten Wassers ist dem ersten Modul vorzugsweise ein erster Wasserspeicher fluidisch nachgeschaltet, in welchem mittels mindestens der ersten und / oder zweiten Module aufbereitetes Friseurabwasser speicherbar ist.

Das in dem ersten Wasserspeicher aufgefangene Wasser kann beispielsweise zur Beregnung und / oder Bewässerung von Grünlagen; im Haushalt, beispielsweise zum Wäsche waschen, als Spülwasser, z.B. im Rahmen der Toilettenspülung etc., verwendet werden. Das in dem ersten Wasserspeicher aufgefangene Wasser kann daher als Brauchwasser oder Haushaltswasser bezeichnet werden.

Um einen reibungslosen und möglichst wartungsfreien Betrieb einer erfindungsgemäßen Vorrichtung zu gewährleisten, wird das in der Zuleitung angeordnete Rückhaltelement mittels der Vorrichtung vorzugsweise automatisch rückgespült.

Hierfür ist vorzugsweise in der Zuleitung dem Rückhaltelement fluidisch vorgeschaltet ein Drucksensor angeordnet, dessen Messergebnis von einer Steuereinheit der Vorrichtung erfasst wird, wobei die Steuereinheit dazu ausgelegt ist, bei einem Erreichen oder Überschreiten eines Grenzwerts des Messergebnisses des Drucksensors selbsttätig einen Spülvorgang des Rückhaltelements auszuführen.

Zur Ausführung des Spülvorgang betätigt die Steuereinheit vorzugsweise mindestens ein Ventil im Rahmen eines Ventilschaltvorgangs, um Flüssigkeit in umgekehrter Richtung zu der Fließrichtung des Friseurabwassers durch das Rückhaltelement in einen Abfluss zu leiten.

Vorzugsweise ist das Rückhaltelement als Sieb ausgestaltet. Weiterhin ist das Rückhaltelement vorzugsweise derart in einer Kammer angeordnet, dass die Zuleitung passierendes Friseurabwasser das Rückhaltelement entgegen der Schwerkraft durchdringt.

Um den Reinheitsgrad des aufbereiteten Wassers weiter zu erhöhen, kann dem ersten Modul fluidisch nachgeschaltet eine mechanisch- chemische Filterstufe zur Entfärbung des Friseurabwassers angeordnet sein, welche vorzugsweise als Aktivkohlefilter ausgestaltet und / oder zwischen dem ersten Modul und dem ersten Wasserspeicher (und ggf. einem zweiten Wasserspeicher) angeordnet ist.

Die mechanisch- chemische Filterstufe kann zusätzlich zur Geruchsneutralisierung des Friseurabwassers dienen. Ein Aktivkohlefilter wirkt beispielsweise mechanisch, indem im Wasser gelöste Stoffe zurückgehalten werden und wirkt chemisch durch eine Adsorption von im Wasser gelösten Stoffen. Beispielsweise werden Chloramine und andere organische Verbindungen an der Kohle gebunden und somit aus dem Wasser entfernt.

Gemäß einer Ausführungsform der Erfindung weist das erste Modul mindestens einen membranbasierten Bioreaktor mit frei schwebenden und / oder an einer Membran immobilisierten Mikroorganismen zur Klärung des Friseurabwassers auf.

Alternativ oder zusätzlich kann das erste Modul mindestens eine Kartusche mit einem Wirbelbett aufweisen, in welchem an Partikeln immobilisierte Mikroorganismen mit dem Friseurabwasser verwirbelt werden, wobei dem ersten Modul vorzugsweise eine mechanische Filterstufe, insbesondere eine Sandfilterstufe, fluidisch nachgeschaltet ist.

Bei den Partikeln handelt es sich vorzugsweise um Stücke porösen Materials mit einer großen Oberfläche, beispielsweise um Schaumstoffstückchen. Ist ein membranbasierter Bioreaktor vorgesehen, so ist die Membran vorzugsweise gefältelt angeordnet, um eine möglichst große Besiedelungsoberfläche mit Mikroorganismen zu bieten.

Gemäß einer Ausführungsform weist das erste Modul eine Mehrzahl an fluidisch in Reihe geschalteten Kartuschen auf, welche jeweils ein Wirbelbett aufweisen, wobei sich die Wirbelbetten hinsichtlich der an den Partikeln immobilisierten Mikroorganismen unterscheiden.

Unter einer Kartusche kann ein beliebiger Behälter verstanden werden.

Um etwaige von der biologischen Aufbereitung des Friseurabwassers herrührende Mikroorganismen in dem Wasser abzutöten, kann dem ersten Modul eine Desinfektions- und / oder Sterilisationseinheit nachgeschaltet sein, welche vorzugsweise mittels UV-Strahlung wirkt.

Soll Wasser höherer Reinheit, beispielsweise in Trinkwasserqualität oder fast Trinkwasserqualität erzeugt werden, so hat es sich in der Praxis als hilfreich erwiesen, wenn eine Umkehrosmoseanlage zur Aufbereitung des Wassers zum Einsatz kommt.

Gemäß einer Ausführungsform umfasst eine erfindungsgemäße Vorrichtung somit eine dem ersten Modul fluidisch nachgeschaltete Umkehrosmoseanlage, welche vorzugsweise mit einem ersten, permeatseitigen Anschluss ausgestattet ist, mittels dessen eine Membran der Umkehrosmosanlage passiert habendes Permeat einem zweiten Wasserspeicher zuführbar ist, und welche weiterhin vorzugsweise mit einem zweiten, retentatseitigen Anschluss ausgestattet ist, mittels dessen durch eine Membran der Umkehrosmosanlage zurückgehaltenes Retentat dem ersten und / oder dem zweiten Modul zur weiteren Aufbereitung zuführbar ist.

Das mittels der Umkehrosmoseanlage aufbereitete Wasser aus dem zweiten Wasserspeicher kann beispielsweise erneut dem Friseurbetrieb zugeleitet werden und beispielsweise zum Haarewaschen oder Spülen zum Einsatz kommen. Zudem kann es wie das Wasser aus dem ersten Wasserspeicher zur Bewässerung von Grünanlagen oder im Haushalt oder auf andere Weise eingesetzt werden.

Vorzugsweise weist die Umkehrosmoseanlage eine Zuleitung auf, mittels welcher das zweite Modul und / oder eine oder mehrere dem zweiten Modul nachgeschaltete Filterstufe(n) passiert habendes Friseurabwasser der Umkehrosmoseanlage zuführbar ist, wobei eine Steuereinheit der Vorrichtung dazu programmiert ist, Friseurabwasser über das erste und / oder zweite Modul und die Umkehrosmoseanlage zu rezirkulieren, bis ein gewünschter Grad der Reinheit des Friseurabwassers vorliegt.

Zur Messung der Reinheit des aufbereiteten Wassers kann beispielsweise im Rahmen einer erfindungsgemäßen Vorrichtung ein Leitfähigkeitssensor vorgesehen sein. So kann z.B. ein Sollwertbereich von zwischen 30 µS / cm und 10 µS / cm, vorzugsweise zwischen 25 µS / cm und 15 µS / cm vorgeben sein, welcher einer gewünschten Reinheit des aufbereiteten Friseurabwassers entspricht.

Erfasst die Steuereinheit der Vorrichtung auf der Grundlage der Messergebnisse des Leitfähigkeitsensors, dass das aufbereitete Friseurabwasser einem gewünschten Reinheitsgrad entspricht, so führt die Steuereinheit vorzugsweise automatisch einen Ventilschaltvorgang aus, um die Rezirkulation zu stoppen und das aufbereitete Friseurabwasser dem ersten und / oder zweiten Wasserspeicher zuzuführen.

Der Leitfähigkeitssensor ist hierbei lediglich ein Beispiel eines Sensors, welcher zu Überprüfung der Reinheit des aufbereiteten Wassers zum Einsatz kommen kann. Denkbar wäre beispielsweise auch ein Lichttransmissionssensor, welcher etwaige Trübungen identifiziert.

Weiterhin hat es sich in der Praxis als hilfreich herausgestellt, wenn die Vorrichtung eine Schnittstelle zum Fernzugriff und / oder zur Fernsteuerung und / oder zur Ferndiagnose aufweist.

Zudem kann die Steuereinheit einer erfindungsgemäßen Vorrichtung vorzugsweise dazu programmiert sein, eine Online-Überwachung des Betriebs der Vorrichtung und / oder von Messergebnissen von Sensoren der Vorrichtung auszuführen. Die Online-Überwachung kann von Ferne mittels der Schnittstelle zur Ferndiagnose erfolgen.

Der Begriff "Online-Überwachung" bedeutet in diesem Zusammenhang vorzugsweise, dass die Überwachung während des laufenden Betriebs der Vorrichtung erfolgt und der Betrieb der Vorrichtung somit nicht zur Überwachung der Funktion der Vorrichtung oder zum Auslesen von Messergebnissen der Sensoren gestoppt werden muss.

Zudem kann der Begriff "Online-Überwachung" dahingehend verstanden werden, dass die Überwachung über das Internet oder eine andere drahtlose Verbindung zwischen der erfindungsgemäßen Vorrichtung und beispielsweise einem Endgerät eines Benutzers erfolgt.

Darüber hinaus kann die Steuereinheit der Vorrichtung dazu ausgelegt sein, den Betrieb der Vorrichtung selbsttätig elektronisch zu dokumentieren. Hierbei können beispielsweise Kennwerte des Betriebs der Vorrichtung, wie beispielsweise ein Druck in einer Leitung, eine Anzahl ausgeführter Spülvorgänge des Rückhalteelements, ein Volumen aufbereiteten Wassers, eine Dauer des Betriebs, Messergebnisse von Sensoren wie beispielsweise Leitfähigkeits- oder Temperatursensoren etc. aufgezeichnet werden.

Eine erfindungsgemäße Vorrichtung ist vorzugsweise als Grauwasseranlage ausgestaltet, welche zur Aufbereitung von Grauwasser ausgelegt ist. Grauwasser bezeichnet vorzugsweise eher geringfügig verschmutztes oder verunreinigtes Wasser.

Weiterhin hat es sich in der Praxis als hilfreich herausgestellt, wenn eine erfindungsgemäße Vorrichtung ist portabel und / oder kompakt ausgestaltet ist. Dies ermöglicht beispielsweise eine einfache Nachrüstung eines bestehenden Friseursalons mit einer erfindungsgemäßen Vorrichtung. Die Nachrüstung eines Friseursalons mit einer erfindungsgemäßen Vorrichtung ist explizit als Teil der Erfindung anzusehen.

Eine erfindungsgemäße Vorrichtung ist demnach vorzugsweise in oder bei einem Friseursalon, vorzugsweise in einem separaten Raum, angeordnet.

Unter dem Begriff "Friseurabwasser" ist im Rahmen der vorliegenden Erfindung vorzugsweise sämtliches Abwasser zu verstehen, welches im Rahmen einer Friseurtätigkeit, beispielsweise beim Waschen, Spülen, Färben, Bleichen, Glätten, bei der chemischen Behandlung (z.B. bei Dauerwellen) oder sonstigen Behandlung von Haaren anfällt.

Nachstehend werden beispielhaft verschiedene im Friseurbetrieb zum Einsatz kommende Präparate und deren Inhaltsstoffe dargelegt, welche in Friseurabwasser in beliebiger Zusammensetzung enthalten sein können:
Oxidationsmittel enthaltend beispielsweise: Wasser, Cetearylalkohol, Wasserstoffperoxid, Lanolin-Alkohol, Natrium-Lauryl-Sulfat, Parfüm, Salicylsäure, Phosphonsäure, Dinatriumphosphat, Linalool, Hexyl Cinnamal, Etidronsäure, Tocopherol Haarfärbemittel enthaltend beispielsweise: Wasser, Cetearylalkohol, Propylenglykol, Ammoniumhydroxid, Dicetylphosphat, Trinatriumethylendiamindisuccinat, Ceteth-10 Phosphat, Steareth-200, Natriumsulfat, Ammoniumsulfat, Natriumhydroxid, Natriumsulfit, Ascorbinsäure, Parfum, Xanthan Gum, Dinatrium EDTA, Toluene-2,5-Diamine Sulfate, Resorcinol, 4-Amino-2-Hydroxytoluen, p-Aminophenol, Geraniol, Linalool, BHT, m-Aminophenol
Mittel zur Blondierung enthaltend beispielsweise: Kaliumpersulfat, Natriumsilikat, Magnesiumcarbonat-Hydroxid, Paraffin, Ammonium Persulfat, Natrium Stearat, Xanthan Gum, Reisstärke, Algin, Dinatrium EDTA, Kieselerde, Cl 77006, Wasser
Mittel für Dauerwellen enthaltend beispielsweise: Wasser, Ammoniumthioglykolat, Ammoniumbicarbonat, Butylenglykol, Propylenglykol, PEG-35, Rizinusöl, Ethoxydiglycol, Coceth-10, Kreatin, Parfum, Polyquaternium-6, Panthenol, Ammonium Hydroxid, Geraniol, Citronellol, Farnesol, Hydrolysierte Seide, Phenoxyethanol, Kaliumsorbat.

Das Verfahren zur Erreichung einer Dauerwelle wird z.B. wie folgt ausgeführt: Zum Öffnen der Struktur der Haare wird ein Reduktionsmittel verwendet (z. B. Salze der Thioglykolsäure, Thiomilchsäure, oder Sulfit). Zum Wiederverknüpfen bzw. Fixieren der Bindungen ist daraufhin eine Oxidation erforderlich (meistens durch Wasserstoffperoxid).

Der pH-Wert der gebrauchsfertigen Reduktionsmittel-Lösungen liegt zwischen 7 und 9,5. Der pH-Wert wird mit einem Alkalisierungsmittel (Ammoniak, Ammoniumbicarbonat, Monoethanolamin) eingestellt. Weitere Bestandteile der Dauerwell-Lotion sind Netzmittel, Lösungsvermittler und als Pflegekomponenten Proteine und Polymere. Duftstoffe sorgen für eine Überdeckung des unangenehmen Geruchs, der durch die Thiole verursacht wird.

Nach dem Aufweichen und Aufwickeln des behandleten Haares muss das umgeformte Haar in seiner neuen Form gefestigt werden. Das geschieht mit Hilfe eines wasserstoffperoxidhaltigen Fixiermittels. Neben Wasserstoffperoxid enthält das Fixiermittel neutralisierende Säuren (z. B. Zitronensäure) sowie Pflegestoffe. Im Handel werden alkalische, mild-alkalische, neutrale sowie Dauerwellpräparate mit veränderlichem pH-Wert angeboten. Sie stehen in flüssiger oder cremiger Form, als Schaum- oder 2-Phasen-Präparate zur Verfügung. Alle diese Dauerwell-Systeme zählen zu den sogenannten Kaltwellpräparaten. Durch Zusatz von Wärme kann die Einwirkzeit verringert werden. Schaumdauerwellen enthalten Treibmittel oder durch Aufschäumen eingebrachte Luft.

Shampoos enthaltend beispielsweise: Wasser, Lauryl Glucoside, Cocamidopropyl Betaine, Polysorbate 20, Cellulose, Glycerin, Hydrolysierte Maistärke, Rote Bete-Extrakt, Panthenol, hydrolysiertes Weizenprotein, Lactobacillus/Solanum Lycopersicum (Tomate) Fruchtferment-Extrakt, Bambusspross-Extrakt, Arganöl, Coco Glucoside, Glyceryl Oleat, Dehydroxanthan Gum, Sorbitol, Propylen Glycol, Zitronensäure, Milchsäure, Natriumchlorid, Tocopherol, hydriertes Palmglyceridcitrat, Parfüm, Limonen, Linalool, Natriumhydroxid, C.I. 14700, Leuconostoc/Rettichwurzelferment-Filtrat, Natriumbenzoat, P-Anisinsäure, Levulinsäure, Natrium Levulinat und / oder Butan, Propan, Alcohol Denat, Aluminium Stärke Octenylsuccinate, Isobutan, Parfüm, Bentonit, Zeolith, Wasser, Oryza Sativa (Reis) - Stärke, Distearyldimonium-Chlorid, Maltodextrin, Cetrimonium-Chlorid, Nephelium Lappaceum Samen- Extract, Zitronensäure, Bis-Aminopropyl Diglycol Dimaleat, Phenoxyethanol, Natrium Benzoat, Citral, Linalool, Citronellol, Limonen, Hexyl Cinnamal und / oder Wasser, Sodium Laureth Sulfat, Sodium Lauryl Sulfat, Ammonium Lauryl Sulfat, Zitronensäure, Natriumchlorid, Natricumcitrat, Natrium-Xylensulfonat, Cocamid MEA, Polyethylen, Parfüm, Natrium Benzoat, Glycerin, Kreatine, Hydriertes Silica, Polyquaternium-10, Trihydroxystearin, Salicylsäure, Tetrasodium EDTA, Polyquaternium-16, Methylparaben, PVP, Limonen, Benzyl Salicylat, Linalool, Benzyl Benzoat, Hexyl Cinnamal, DMDM Hydantoin.

Haarkuren enthaltend beispielsweise: Wasser, Cetearyl Alcohol, Hydroxyethyl Cethyldimonium Phosphat, Lactobacillus/Solanum Lycopersicum (Tomate) Fruchtferment-Extrakt, Hydrolysierte Maistärke, Rote Bete- Extrakt, Panthenol, Hydrolysiertes Kollagen, Glycerin, Zitronensäure, Milchsäure, Parfüm, Limonen, Linalool, Leuconostoc/Rettich-Wurzelferment-Filtrat, Phenoxyethanol, Ethylhexylglycerin, P-Anisinsäure, Levulinsäure, Natrium, Levulinat.

Weiterhin kann in Friseurabwasser enthalten sein: Cetearylalkohol, Dimethicon, Isohexadecan, Coco-Caprylat, Neopentylglykoldiheptanoat, Behentrimoniumchlorid, Isododecan, Phenyltrimethicon, Propandiol, Bis-Aminopropyldiglykoldimaleat, Duftstoff (Parfum), Cetrimoniumchlorid, Phenoxyethanol, Glycerylstearat, Isopropylalkohol, Hydroxyethylcellulose, Hydroxypropyl Guar, Natrium-Stearoyl-Lactylat, Hydroxypropyl-Cyclodextrin, Hexyl Cinnamal, Limonen, Citral, hydrolysiertes pflanzliches Protein PG-Propyl-Silanetriol, Dinatrium- EDTA, Linalool, Citronellol, Iodopropynylbutylcarbamat, Hydroxycitronellal, Ätidronsäure, Tocopherol, Geraniol, Kaliumsorbat, Helianthus Annuus (Sonnenblume) Samenöl, Phytantriol, Natriumbenzoat, Pseudozyma Epicola/Camellia Sinensis Samenölferment-Extrakt, Filtrat Tocopherylacetat, Vitis Vinifera (Traube) Samenöl, Aloe Barbadensis-Blattsaft, Panthenol, Zitronensäure, Gigartina, Stellata-Extrakt, Chondrus Crispus (Carrageen) Extrakt, Ascorbinsäure, Cocos Nucifera (Kokosnuss) Öl.

Ein weiterer Aspekt der vorliegenden Erfindung betrifft ein Verfahren zur Aufbereitung von Friseurabwasser, wobei das Verfahren vorzugsweise mittels einer erfindungsgemäßen Vorrichtung ausgeführt wird.

An dieser Stelle ist darauf hinzuweisen, dass sämtliche vorstehend im Rahmen einer erfindungsgemäßen Vorrichtung offenbarten Merkmale ebenfalls im Kontext eines erfindungsgemäßen Verfahrens zu verstehen und von der vorliegenden Offenbarung umfasst sind. Lediglich aus Gründen der Vermeidung von Redundanzen werden nicht sämtliche im Rahmen einer erfindungsgemäßen Vorrichtung offenbarten Merkmale mit Bezug auf ein erfindungsgemäßes Verfahren nachstehend explizit repliziert.

Ein erfindungsgemäßes Verfahren zur Aufbereitung von Friseurabwasser umfasst die Schritte:
- Zuführen von Friseurabwasser an eine Vorrichtung zur Aufbereitung von Friseurabwasser mittels einer Zuleitung, wobei in der Zuleitung mindestens ein vorzugsweise automatisch rückspülendes Rückhaltelement zum Zurückhalten von Haaren angeordnet ist;
- biologische Klärung des Friseurabwassers mittels Mikroorganismen, vorzugsweise in einem Mikroorganismen aufweisenden ersten Modul, und
- Durchsprudeln des Friseurabwassers in dem ersten Modul mittels einer Belüftungseinrichtung.

Vorzugsweise weist das erste Modul mindestens einen membranbasierten Bioreaktor mit frei schwebenden und / oder an einer Membran immobilisierten Mikroorganismen zur Klärung des Friseurabwassers auf.

Alternativ oder zusätzlich weist das erste Modul mindestens eine Kartusche mit einem Wirbelbett auf, in welchem an Partikeln immobilisierte Mikroorganismen mit dem Friseurabwasser verwirbelt werden, wobei dem ersten Modul vorzugsweise eine mechanische Filterstufe, insbesondere eine Sandfilterstufe, fluidisch nachgeschaltet ist.

Soll besonders reines Wasser erzeugt werden, so umfasst ein erfindungsgemäßes Verfahren vorzugsweise den Schritt:
- Rezirkulieren von Friseurabwasser über das zweite Modul und eine Umkehrosmoseanlage, bis ein gewünschter Grad der Reinheit des Friseurabwassers vorliegt.

An dieser Stelle ist darauf hinzuweisen, dass, wenn im Rahmen der vorliegenden Anmeldung ein bestimmtes Element im Singular mit den Artikeln "ein" oder "eine" bezeichnet ist, dies keineswegs als "genau ein" bzw. "genau eine" auszulegen ist, sondern die vorliegende Offenbarung selbstverständlich auch eine Ausgestaltung mit dem betreffenden Element im Plural umfasst, und umgekehrt.

Weiterhin ist es für den zuständigen Fachmann zum Zeitpunkt der vorliegenden Anmeldung selbstverständlich, dass die vorliegende Anmeldung nicht auf die darin explizit offenbarten Merkmalskombinationen beschränkt ist, sondern die offenbarten Merkmale auch in anderen Kombination oder gegebenfalls in isolierter Form vom Offenbarungsgehalt der vorliegenden Anmeldung umfasst sind.

Weitere Vorteile, Merkmale und Effekte der vorliegenden Erfindung ergeben sich aus der nachtsehenden Beschreibung bevorzugter Ausführungsformen unter Bezugnahme auf die Figuren, in denen gleiche Bezugszeichen gleiche oder ähnliche Bauteile bezeichnen. Hierbei zeigen:
Fig. 1: eine erfindungsgemäße Vorrichtung gemäß einer ersten Ausführungsform;
Fig. 2: eine erfindungsgemäße Vorrichtung gemäß einer zweiten Ausführungsform;
Fig. 3: eine erfindungsgemäße Vorrichtung gemäß einer dritten Ausführungsform;
Fig. 4: eine erfindungsgemäße Vorrichtung gemäß einer vierten Ausführungsform;
Fig. 5: eine erfindungsgemäße Vorrichtung gemäß einer fünften Ausführungsform; und
Fig. 6: eine erfindungsgemäße Vorrichtung gemäß einer sechsten Ausführungsform.

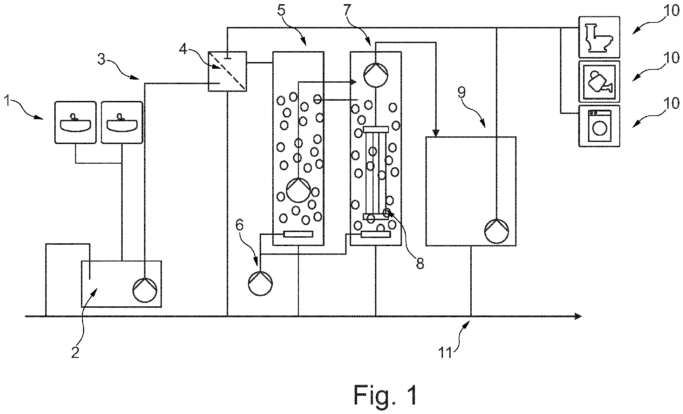

Die Ausführungsformen der Figuren 1 bis 3 weisen jeweils ein erstes Modul mit einem membranbasierten Bioreaktor (MBR) auf.

Wie in Fig. 1 gezeigt, wird Friseurabwasser von zwei Friseurwaschtischen 1 über eine Hebeanlage 2 und eine Zuleitung 3 einer erfindungsgemäßen Vorrichtung zugeführt. Hierbei wird das Friseurabwasser durch ein in einer Kammer angeordnetes, automatisch rückspülbares Sieb 4 geleitet, um Haare aus dem Friseurabwasser zu entfernen.

Daraufhin wird das Friseurabwasser in ein Modul 5 zur biologischen Vorklärung geleitet. Mittels einer Luftpumpe 6 werden das Modul 5 zur biologischen Vorklärung sowie das diesem nachgeschaltete Modul 7 mit einem membranbasierten Bioreaktor (MBR) belüftet. Das Modul 7 enthält eine Membran 8, welche bei einem Durchströmen der Membran durch das Wasser frei schwebende Mikroorganismen zurückhält.

Von dem Modul 7 gelangt das aufbereitete Wasser in einen Wasserspeicher 9, aus welchem das Wasser bei Bedarf, beispielsweise mittels einer Pumpe, entnommen und einer weiteren Verwendung, wie beispielsweise zur Toilettenspülung, zum Wäschewaschen oder zur Bewässerung von Pflanzen, wie durch das Bezugszeichen 10 angedeutet, zugeführt werden kann.

Das Siebe 4, die Module 5 und 7 sowie der Wasserspeicher 9 sind jeweils mit einem gemeinsamen Abfluss 11 verbunden.

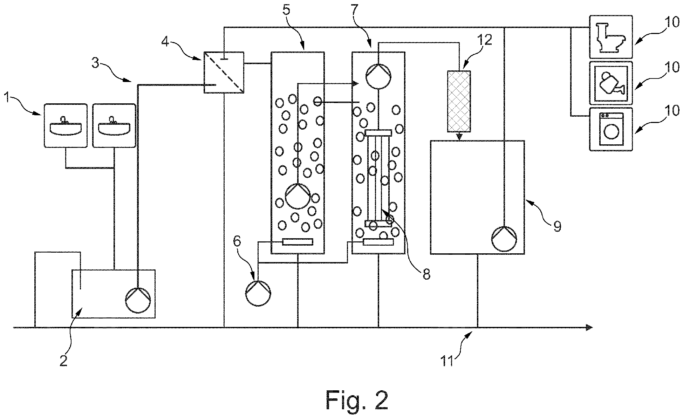

Die Ausführungsform gemäß Fig. 2 unterscheidet sich von der Ausführungsform gemäß Fig. 1 darin, dass zwischen dem Modul 7 und dem Wasserspeicher 9 ein Aktivkohlefilter 12 vorhanden ist.

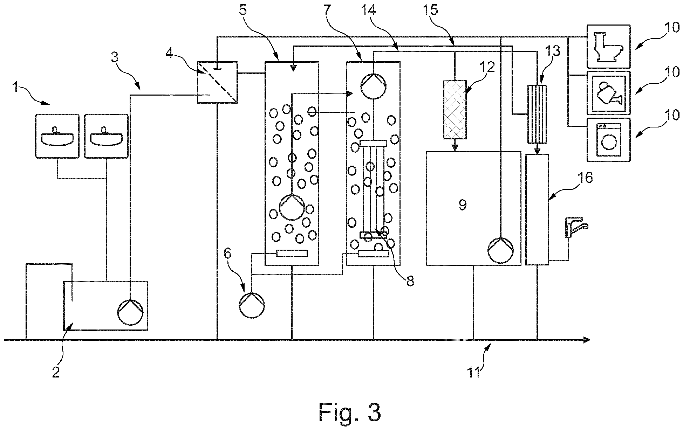

Die Ausführungsform gemäß Fig. 3 unterscheidet sich von der Ausführungsform gemäß Fig. 2 darin, dass weiterhin eine Umkehrosmoseanlage 13 vorhanden ist.

Die Umkehrosmoseanlage 13 ist über eine Leitung 14 mit dem Modul 7 verbunden. Über die Leitung 15 kann Retentat der Umkehrosmoseanlage 13 in das Modul 5 eingespeist werden. Die Leitungen 14 und 15 bilden daher einen Rezirkulationskreislauf, um Wasser über die Umkehrosmoseanlage 13 sowie die Module 5 und 7 zu rezirkulieren.

Das Permeat der Umkehrosmoseanlage 13 sowie ggf. Wasser aus dem Rezirkulationskreislauf, welches einen gewünschten Reinheitsgrad erreicht hat, wird in einen Wasserspeicher 16 eingespeist.

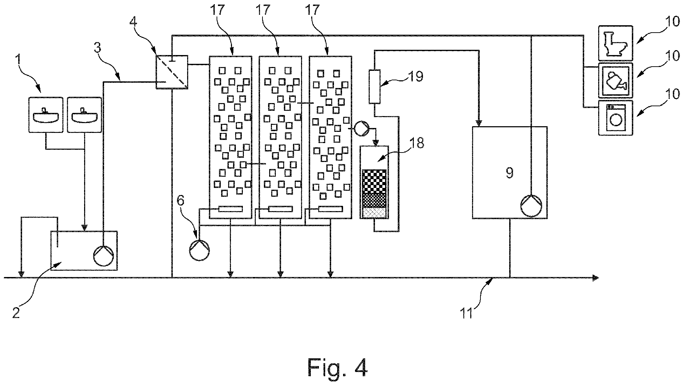

Die Ausführungsformen der Figuren 4 bis 6 weisen jeweils ein erstes Modul mit mehreren Kartuschen 17 mit Wirbelbetten (MBBR) auf.

Die Kartuschen 17 sind, wie in Fig. 4 gezeigt, fluidisch in Reihe geschaltet und werden jeweils von der Luftpumpe 6 belüftet. In den Wirbelbetten werden Schaumstoffstückchen mit daran immobilisierten Mikroorganismen mit dem aufzubereitenden Friseurabwasser verwirbelt.

Ein Vorteil einer Ausgestaltung mit Wirbelbetten (MBBR) besteht darin, dass diese weniger stark durchsprudelt bzw. belüftet werden müssen als membranbasierte Reaktoren (MBR) und daher besonders stromsparend sind.

Der letzten Kartusche 17 ist ein Sandfilter 18 nachgeschaltet, auf welchen eine UV-Desinfektionseinheit 19 folgt.

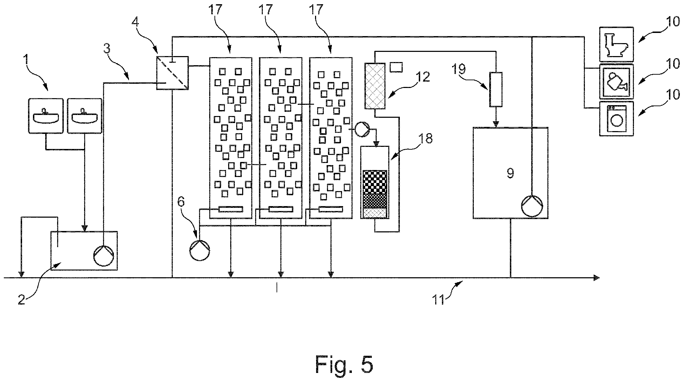

Die Ausführungsform gemäß Fig. 5 unterscheidet sich von der Ausführungsform gemäß Fig. 4 darin, dass zwischen dem Sandfilter 18 und der UV-Desinfektionseinheit 19 ein Aktivkohlefilter 12 vorhanden ist.

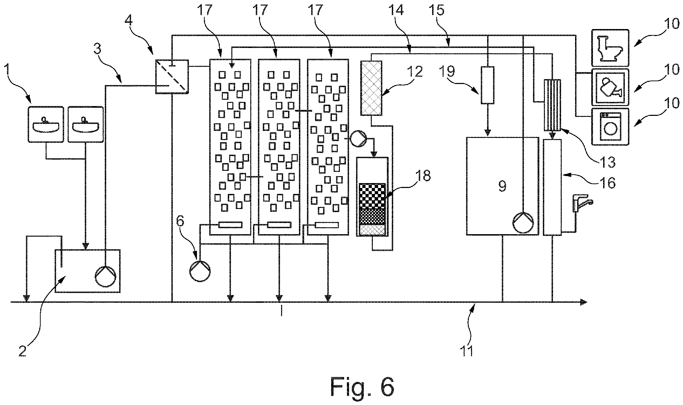

Die Ausführungsform gemäß Fig. 6 unterscheidet sich von der Ausführungsform gemäß Fig. 5 darin, dass weiterhin eine Umkehrosmoseanlage 13 vorhanden ist.

Die Umkehrosmoseanlage 13 ist über eine Leitung 14 über den Aktivkohlefilter 12 und den Sandfilter 18 mit dem Modul 7 bzw. dessen Kartuschen 17 verbunden. Über die Leitung 15 kann Retentat der Umkehrosmoseanlage 13 in die erste Kartusche 17 eingespeist werden.

Die Leitungen 14 und 15 bilden daher einen Rezirkulationskreislauf, um Wasser über die Umkehrosmoseanlage 13 sowie die die Kartuschen 17, den Sandfilter 18 und den Aktivkohlefilter 12 zu rezirkulieren.

## Patentansprüche

1. Vorrichtung zur Aufbereitung von Friseurabwasser, umfassend
- eine Zuleitung für Friseurabwasser, die die Vorrichtung mit mindestens einem Friseurwaschtisch verbindet, wobei in der Zuleitung mindestens ein vorzugsweise automatisch rückspülendes Rückhaltelement zum Zurückhalten von Haaren angeordnet ist;
- ein erstes Modul zur biologischen Klärung des Friseurabwassers mittels Mikroorganismen; sowie
- eine Belüftungseinrichtung, welche dazu ausgelegt ist, das Friseurabwasser in dem ersten Modul zu durchsprudeln.

2. Vorrichtung gemäß Anspruch 1, **dadurch gekennzeichnet, dass** weiterhin ein dem Rückhaltelement fluidisch nachgeschaltetes und dem ersten Modul fluidisch vorgeschaltetes zweites Modul zur biologischen Vorklärung des Friseurabwassers vorgesehen ist, wobei die Belüftungseinrichtung vorzugsweise dazu ausgelegt ist, das Friseurabwasser in dem zweiten Modul zu durchsprudeln.

3. Vorrichtung gemäß Anspruch 1 oder 2, **dadurch gekennzeichnet, dass** dem ersten Modul ein erster Wasserspeicher fluidisch nachgeschaltet ist, in welchem mittels der ersten und / oder zweiten Module aufbereitetes Friseurabwasser speicherbar ist.

4. Vorrichtung gemäß einem der vorhergehenden Ansprüche, **dadurch gekennzeichnet, dass** in der Zuleitung dem Rückhaltelement fluidisch vorgeschaltet ein Drucksensor angeordnet ist, dessen Messergebnis von einer Steuereinheit erfasst wird, wobei die Steuereinheit dazu ausgelegt ist, bei einem Erreichen oder Überschreiten eines Grenzwerts des Messergebnises des Drucksensors selbsttätig einen Spülvorgang des Rückhaltelements auszuführen.

5. Vorrichtung gemäß einem der vorhergehenden Ansprüche, **dadurch gekennzeichnet, dass** dem ersten Modul fluidisch nachgeschaltet eine Filterstufe zur Entfärbung des Friseurabwassers angeordnet ist, welche vorzugsweise als Aktivkohlefilter ausgestaltet und / oder zwischen dem ersten Modul und dem Wasserspeicher angeordnet ist.

6. Vorrichtung gemäß einem der vorhergehenden Ansprüche, **dadurch gekennzeichnet, dass** das erste Modul mindestens einen membranbasierten Bioreaktor mit frei schwebenden und / oder an einer Membran immobilisierten Mikroorganismen zur Klärung des Friseurabwassers aufweist.

7. Vorrichtung gemäß einem der vorhergehenden Ansprüche, **dadurch gekennzeichnet, dass** das erste Modul mindestens eine Kartusche mit einem Wirbelbett aufweist, in welchem an Partikeln immobilisierte Mikroorganismen mit dem Friseurabwasser verwirbelt werden, wobei dem ersten Modul vorzugsweise eine mechanische Filterstufe, insbesondere eine Sandfilterstufe, fluidisch nachgeschaltet ist.

8. Vorrichtung gemäß Anspruch 7, **dadurch gekennzeichnet, dass** das erste Modul eine Mehrzahl an in Reihe geschalteten Kartuschen aufweist, welche jeweils ein Wirbelbett aufweisen, wobei sich die Wirbelbetten hinsichtlich der an den Partikeln immobilisierten Mikroorganismen unterscheiden.

9. Vorrichtung gemäß einem der vorhergehenden Ansprüche, **dadurch gekennzeichnet, dass** dem ersten Modul eine Desinfektions- und / oder Sterilisationseinheit nachgeschaltet ist, welche vorzugsweise mittels UV-Strahlung wirkt.

10. Vorrichtung gemäß einem der vorhergehenden Ansprüche, **dadurch gekennzeichnet, dass** die Vorrichtung weiterhin eine dem ersten Modul fluidisch nachgeschaltete Umkehrosmoseanlage aufweist, welche mit einem ersten, permeatseitigen Anschluss ausgestattet ist, mittels dessen eine Membran der Umkehrosmoseanlage passiert habendes Permeat einem zweiten Wasserspeicher zuführbar ist, und welche mit einem zweiten, retentatseitigen Anschluss ausgestattet ist, mittels dessen durch eine Membran der Umkehrosmosanlage zurückgehaltenes Retentat dem ersten und / oder dem zweiten Modul zur weiteren Aufbereitung zuführbar ist.

11. Vorrichtung gemäß Anspruch 10, **dadurch gekennzeichnet, dass** die Umkehrosmoseanlage eine Zuleitung aufweist, mittels welcher das zweite Modul und / oder eine dem zweiten Modul nachgeschaltete Filterstufe passiert habendes Friseurabwasser der Umkehrosmosanlage zuführbar ist, und eine Steuereinheit der Vorrichtung dazu programmiert ist, Friseurabwasser über das erste und / oder zweite Modul und die Umkehrosmoseanlage zu rezirkulieren, bis ein gewünschter Grad der Reinheit des Friseurabwassers vorliegt.

12. Verfahren zur Aufbereitung von Friseurabwasser, wobei das Verfahren vorzugsweise mittels einer Vorrichtung gemäß einem der Ansprüche 1 bis 11 ausgeführt wird, wobei das Verfahren die folgenden Schritte aufweist:
- Zuführen von Friseurabwasser an eine Vorrichtung zur Aufbereitung von Friseurabwasser mittels einer Zuleitung, wobei in der Zuleitung mindestens ein vorzugsweise automatisch rückspülendes Rückhaltelement zum Zurückhalten von Haaren angeordnet ist;
- biologische Klärung des Friseurabwassers mittels Mikroorganismen, vorzugsweise in einem Mikroorganismen aufweisenden ersten Modul, und
- Durchsprudeln des Friseurabwassers in dem ersten Modul mittels einer Belüftungseinrichtung.

13. Verfahren zur Aufbereitung von Friseurabwasser gemäß Anspruch 12, **dadurch gekennzeichnet, dass** das erste Modul mindestens einen membranbasierten Bioreaktor mit frei schwebenden Mikroorganismen und / oder an einer Membran immobilisierten Mikroorganismen zur Klärung des Friseurabwassers aufweist.

14. Verfahren zur Aufbereitung von Friseurabwasser gemäß Anspruch 12 oder 13, **dadurch gekennzeichnet, dass** das erste Modul mindestens eine Kartusche mit einem Wirbelbett aufweist, in welchem an Partikeln immobilisierte Mikroorganismen mit dem Friseurabwasser verwirbelt werden, wobei dem ersten Modul vorzugsweise eine mechanische Filterstufe, insbesondere eine Sandfilterstufe, fluidisch nachgeschaltet ist.

15. Verfahren zur Aufbereitung von Friseurabwasser gemäß einem der Ansprüche 12 bis 14, wobei das Verfahren weiterhin den Schritt aufweist:
- Rezirkulieren des Friseurabwassers über das zweite Modul und eine Umkehrosmoseanlage, bis ein gewünschter Grad der Reinheit des Friseurabwassers vorliegt.
